# EUROPEAN PATENT APPLICATION

(11) **EP 4 614 679 A1**
(43) Date of publication of application: **10.09.2025**
(21) Application number: 24863242.4
(22) Date of filing: 06.09.2024
(51) Int. Cl.: H01M 10/655, H01M 50/502, H01M 10/6556, H01M 10/613, H01M 50/211

(54) **BATTERY ASSEMBLY AND BATTERY PACK COMPRISING SAME**

(30) Priority: 08.09.2023 KR 20230119622
(71) Applicant: LG Energy Solution, Ltd., Seoul 07335 (KR)
(72) Inventor: JANG, Sung Hwan, Daejeon 34122 (KR); KIM, Gwan Woo, Daejeon 34122 (KR); KIM, Da Young, Daejeon 34122 (KR); KIM, Jae Wook, Daejeon 34122 (KR)
(74) Representative: BCKIP Part mbB
(86) International application number: PCT/KR2024/013468
(87) International publication number: WO 2025/053663

(57) **Abstract**

The present technology provides a battery assembly including a first cell block including a plurality of first battery cells, a second cell block including a plurality of second battery cells and spaced apart from the first cell block, and a thermally conductive block disposed between the first cell block and the second cell block, and configured to thermally couple a first electrode lead of the first cell block and a second electrode lead of the second cell block.

## Description

### [Technical Field]

The present invention relates to a battery assembly and a battery pack including the same.

This application claims the benefit of priority based on Korean Patent Application No. 10-2023-0119622, filed on September 8, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles. As secondary batteries are used for mobility, research is being conducted on technology of enhancing energy density of secondary batteries.

### [Disclosure]

### [Technical Problem]

The present invention is directed to providing a battery assembly and a battery pack including the same.

### [Technical Solution]

An aspect of the present invention provides a battery assembly including a first cell block including a plurality of first battery cells, a second cell block including a plurality of second battery cells and spaced apart from the first cell block, and a thermally conductive block disposed between the first cell block and the second cell block, and configured to thermally couple a first electrode lead of the first cell block and a second electrode lead of the second cell block.

In example embodiments, the thermally conductive block may be in direct contact with the first electrode lead of the first cell block and the second electrode lead of the second cell block.

In example embodiments, the battery assembly may further include a first bus bar coupled to the first electrode lead of the first cell block, and a second bus bar coupled to the second electrode lead of the second cell block, and the thermally conductive block may be in direct contact with the first bus bar and the second bus bar.

In example embodiments, the battery assembly may further include a first bus bar frame on which the first bus bar is mounted, a second bus bar frame on which the second bus bar is mounted, and a frame providing an inner space filled with the thermally conductive block, and coupled to at least one of the first bus bar frame and the second bus bar frame.

In example embodiments, the frame may include two side plates spaced apart from each other with the inner space therebetween, and the two side plates may extend from the first bus bar frame to the second bus bar frame.

In example embodiments, the battery assembly may further include a case configured to accommodate the first cell block and the second cell block.

In example embodiments, the case may include a first cover plate covering a first surface of the first cell block and a first surface of the second cell block, the first cover plate may include a cooling channel, and the thermally conductive block may be in contact with the first cover plate.

In example embodiments, the case may include a side cover plate covering a side surface of the first cell block and a side surface of the second cell block, and the side cover plates may include a fastening flange configured to be fastened to an external support structure.

In example embodiments, the battery assembly may further include an inter-block bus bar extending between the first cell block and the second cell block, and configured to electrically connect the first cell block to the second cell block.

In example embodiments, the battery assembly may further include an additional thermally conductive block disposed between the first cell block and the second cell block, and configured to thermally couple another first electrode lead of the first cell block and another second electrode lead of the second cell block, and the additional thermally conductive block may be spaced apart from the thermally conductive block.

In example embodiments, the first cell block and the second cell block may be spaced apart from each other in a first direction, in the first cell block, the plurality of first battery cells may be stacked in a second direction perpendicular to the first direction, and in the second cell block, the plurality of second battery cells may be stacked in the second direction.

In example embodiments, the thermally conductive block may include a thermal interface material.

As aspect of the present invention provides a battery pack including a pack housing, and a battery assembly in the pack housing, in which the battery assembly includes a first cell block including a plurality of first battery cells, a second cell block including a plurality of second battery cells and spaced apart from the first cell block, a thermally conductive block disposed between the first cell block and the second cell block, and configured to thermally couple a first electrode lead of the first cell block and a second electrode lead of the second cell block, and a case configured to accommodate the first cell block and the second cell block.

In example embodiments, the case may include: a first cover plate covering a first surface of the first cell block and a first surface of the second cell block, and including a cooling channel; a side cover plate covering a side surface of the first cell block and a side surface of the second cell block, and including a fastening flange configured to be fastened to a support structure on a bottom plate of the pack housing; and a second cover plate covering a second surface of the first cell block and a second surface of the second cell block, wherein the second surface of the first cell block is opposite to the first surface of the first cell block, and the second surface of the second cell block is opposite to the first surface of the second cell block.

In example embodiments, the case may be spaced apart from the bottom plate of the pack housing.

### [Advantageous Effects]

According to example embodiments of the present invention, a battery assembly includes cell blocks each having a plurality of battery cells, thus increasing energy density and achieving a large-scale module.

According to example embodiments of the present invention, a first electrode lead of a first cell block and a second electrode lead of a second cell block that face each other and/or a first bus bar and a second bus bar that face each other are thermally coupled by a thermally conductive block to enhance thermal coupling between cell blocks. Accordingly, temperature deviations between the cell blocks may decrease, and efficiency of thermal performance management and temperature deviation management of the cell blocks may improve.

According to example embodiments of the present invention, a thermally conductive block functioning as a thermal diffusion member is attached to an electrode lead of a cell block and/or a bus bar to achieve a fast charging condition according to customers' demand and suppress the electrode lead of the cell block and/or the bus bar from being excessively heated.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a part of a battery assembly according to example embodiments of the present invention.
FIG. 2 is an enlarged view of an area indicated by "EX1" of FIG. 1.
FIG. 3 is an enlarged view of FIG. 2, in which an inter-block bus bar is omitted.
FIG. 4 is a cross-sectional view of the battery assembly taken along line AA-AA' of FIG. 1.
FIG. 5 is a cross-sectional view of a thermally conductive block of the battery assembly of FIG. 1.
FIG. 6 is a cross-sectional view of the battery assembly taken along line BB-BB' of FIG. 1.
FIG. 7 is a cross-sectional view of a battery pack according to example embodiments of the present invention.
FIG. 8 is a schematic view of an electric vehicle in which a battery pack according to example embodiments of the present invention is mounted.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

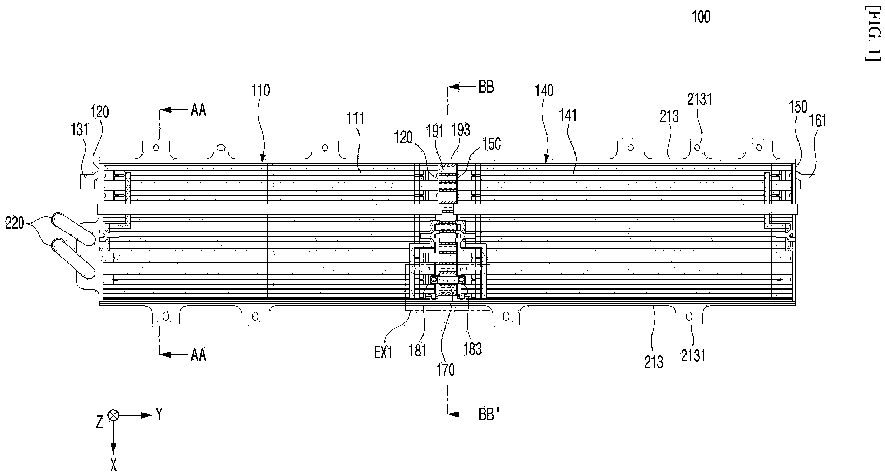

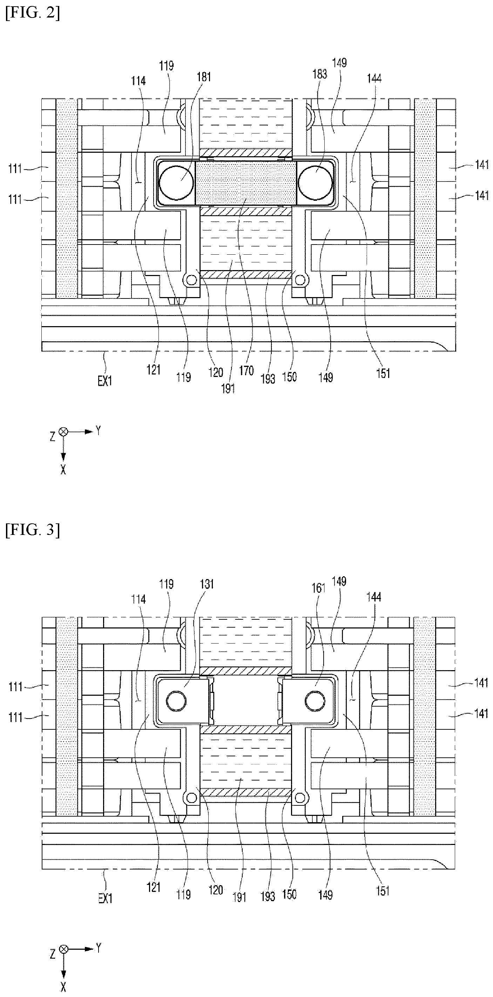

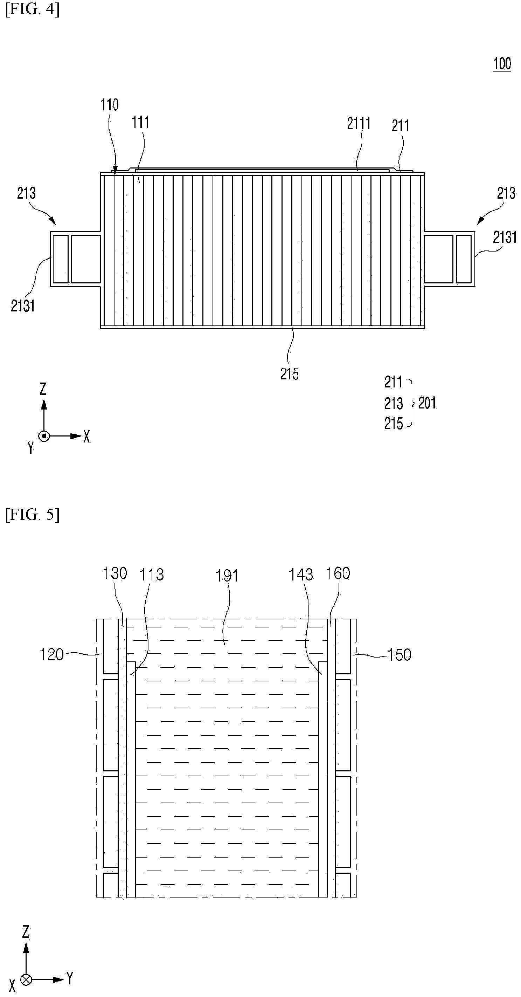

FIG. 1 is a plan view of a part of a battery assembly 100 according to example embodiments of the present invention.FIG. 2 is an enlarged view of an area indicated by "EX1" of FIG. 1.FIG. 3 is an enlarged view of FIG. 2, in which an inter-block bus bar 170 is omitted.FIG. 4 is a cross-sectional view of the battery assembly 100 taken along line AA-AA' of FIG. 1.FIG. 5 is a cross-sectional view of a thermally conductive block 191 of the battery assembly 100 of FIG. 1.

Referring to FIGS. 1 to 5, the battery assembly 100 may include a first cell block 110 and a second cell block 140 that are arranged in a first direction (e.g., a Y-axis direction). The first cell block 110 and the second cell block 140 may be spaced apart from each other in the first direction (e.g., the Y-axis direction). FIGS. 1 and 2 illustrate that the battery assembly 100 includes two cell blocks but the number of cell blocks included in the battery assembly 100 is not limited to 2.For example, the battery assembly 100 may include two or more cell blocks arranged in the first direction (e.g., the Y-axis direction).

Each of the first cell block 110 and the second cell block 140 may include a plurality of battery cells. Each of the battery cells is a basic unit of a lithium ion battery, i.e., a secondary battery. Each of the battery cells may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

In each of the first cell block 110 and the second cell block 140, the plurality of battery cells may be connected in series and/or in parallel. For example, in each of the first cell block 110 and the second cell block 140, the plurality of battery cells may be connected in series. For example, in each of the first cell block 110 and the second cell block 140, the plurality of battery cells may be connected in parallel. For example, in each of the first cell block 110 and the second cell block 140, when a set of two or more battery cells connected in parallel is defined as a bank, one bank including two or more battery cells connected in parallel and another bank including two or more battery cells connected in parallel may be connected in series.

In each of the first cell block 110 and the second cell block 140, each battery cell may be a pouch type battery cell, a cylindrical battery cell, or a prismatic batteries cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, each battery cell may be a pouch type battery cell. In each of the first cell block 110 and the second cell block 140, the plurality of battery cells may be stacked together in a second direction (e.g., an X-axis direction). In example embodiments, in each of the first cell block 110 and the second cell block 140, the plurality of battery cells may be a pouch type battery cell whose length in the second direction (e.g., the X-axis direction) is less than a length thereof in the first direction (e.g., the Y-axis direction).

In the present disclosure, the battery cells included in the first cell block 110 may be referred to as first battery cells 111.Each of the first battery cells 111 may include a first electrode assembly, a first cell case accommodating the first electrode assembly, and a first electrode lead 113 electrically connected to the first electrode assembly. The first cell case may include a first case body with an accommodation space for accommodating the first electrode assembly, and first cell terrace parts 119 around the first case body. The first cell terrace parts 119 are outer parts of the first cell case and may extend from the first case body. The first cell terrace parts 119 may include a sealing bonding part for sealing the first electrode assembly. Parts of the first electrode lead 113 may protrude from the first cell terrace parts 119.Each of the first battery cells 111 may include a pair of first electrode leads 113. In each of the first battery cells 111, one of the pair of first electrode leads 113 may protrude outward from the first cell terrace part 119 on one end of the first cell case in the first direction (e.g., the Y-axis direction), and the other first electrode lead 113 may protrude outward from the first cell terrace part 119 on another end of the first cell case in the first direction (e.g., the Y-axis direction). A first clearance 114 may be provided between the first cell terrace parts 119 of two adjacent first cell blocks 110 among the plurality of first cell blocks 110.

In the present disclosure, the battery cells included in the second cell block 140 may be referred to as second battery cells 141.Each of the second battery cells 141 may include a second electrode assembly, a second cell case accommodating the second electrode assembly, and a second electrode lead 143 electrically connected to the second electrode assembly. The second cell case may include a second case body with an accommodation space for accommodating the second electrode assembly, and second cell terrace parts 149 around the second case body. The second cell terrace parts 149 are outer parts of the second cell case and may extend from the second case body. The second cell terrace parts 149 may include a sealing bonding part for sealing the second electrode assembly. Parts of the second electrode lead 143 may protrude from the second cell terrace parts 149.Each of the second battery cells 141 may include a pair of second electrode leads 143. In each of the second battery cells 141, one of the pair of second electrode leads 143 may protrude outward from the second cell terrace part 149 on one end of the second cell case in the first direction (e.g., the Y-axis direction), and the other second electrode lead 143 may protrude outward from the second cell terrace part 149 on another end of the second cell case in the first direction (e.g., the Y-axis direction).A second clearance 144 may be provided between the second cell terrace parts 149 of two adjacent second cell blocks 140 among the plurality of second cell blocks 140.

When viewed in a plan view, each of the first cell block 110 and the second cell block 140 may have a rectangular shape whose a length in the second direction (e.g., the X-axis direction) is less than a length thereof in the first direction (e.g., the Y-axis direction).Each of the first cell block 110 and the second cell block 140 may include two side surfaces facing each other in the second direction (e.g., the X-axis direction), a front surface and a rear surface facing each other in the first direction (e.g., the Y-axis direction), and a first surface (e.g., an upper surface) and a second surface (e.g., a lower surface) facing each other in a third direction (e.g., a Z-axis direction). The rear surface of the first cell block 110 may face the front surface of the second cell block 140.

A first bus bar frame 120 on which first bus bars 130 are mounted may be provided on the front and rear surfaces of the first cell block 110. The first bus bars 130 may include a first inter-bus bar and a first terminal bus bar 131. The first inter-bus bar may be coupled to the first electrode leads 113 of different first battery cells 111 belonging to the first cell block 110 to electrically connect the different first battery cells 111. The first terminal bus bar 131 may be coupled to at least one of the first electrode leads 113 protruding from the first cell terrace parts 119 of the first battery cells 111. The first terminal bus bar 131 may electrically connect the first cell block 110 to the second cell block 140 or another external electric device. One or more first inter-bus bars and one or more first terminal bus bars 131 may be mounted on the first bus bar frame 120 on the front surface of the first cell block 110, and one or more first inter-bus bars and one or more first terminal bus bars 131 may be mounted on the first bus bar frame 120 on the rear surface of the first cell block 110.

A second bus bar frame 150 on which bus bars are mounted may be provided on the front and rear surfaces of the second cell block 140. The second bus bars 160 may include a second inter-bus bar and a second terminal bus bar 161. The second inter-bus bar may be coupled to the second electrode leads 143 of different second battery cells 141 belonging to the second cell block 140 to electrically connect the different second battery cells 141. The second terminal bus bar 161 may be coupled to at least one of the second electrode leads 143 protruding from the second cell terrace parts 149 of the second battery cells 141. The second terminal bus bar 161 may electrically connect the second cell block 140 to the first cell block 110 or another external electric device. One or more second inter-bus bars and one or more second terminal bus bars 161 may be mounted on the second bus bar frame 150 on the front surface of the second cell block 140, and one or more second inter-bus bars and one or more second terminal bus bars 161 may be mounted on the second bus bar frame 150 on the rear surface of the second cell block 140.

The battery assembly 100 may include the thermally conductive block 191 in a space between the first cell block 110 and the second cell block 140. The thermally conductive block 191 is thermally conductive but is electrically non-conductive. In example embodiments, the thermally conductive block 191 may be formed of a thermal interface material (TIM) and/or a thermally conductive resin. The thermally conductive block 191 may extend between the first cell block 110 and the second cell block 140 to thermally couple the first cell block 110 and the second cell block 140. The battery assembly 100 may include one or more thermally conductive blocks 191. In example embodiments, a plurality of thermally conductive blocks 191 may be provided in the space between the first cell block 110 and the second cell block 140 to be spaced apart from each other in the second direction (e.g., the X-axis direction).

In example embodiments, the thermally conductive block 191 may be in direct contact with the first electrode lead 113 of the first cell block 110 and the second electrode lead 143 of the second cell block 140, and thermally couple the first electrode lead 113 of the first cell block 110 and the second electrode lead 143 of the second cell block 140.

In example embodiments, the thermally conductive block 191 may in direct contact with the first bus bar 130 and the second bus bar 160 and thermally couple the first bus bar 130 and the second bus bar 160. The thermally conductive block 191 may be coupled to the first inter-bus bar or the first terminal bus bar 131. The thermally conductive block 191 may be coupled to the second inter-bus bar or the second terminal bus bar 161.

The battery assembly 100 may include a frame 193 for accommodation of the thermally conductive block 191. The thermally conductive block 191 may at least partially fill an inner space provided by the frame 193. The frame 193 may include two side plates spaced apart from each other in the second direction (e.g., the X-axis direction) with an inner space, for accommodation of the thermally conductive block 191, therebetween. When viewed in a plan view, the two side plates of the frame 193 may extend between the first bus bar frame 120 and the second bus bar frame 150 in the first direction (e.g., the Y-axis direction). The frame 193 may be coupled to at least one of the first bus bar frame 120 and the second bus bar frame 150. In example embodiments, the frame 193 may be a part of the first bus bar frame 120 or a part of the second bus bar frame 150, and may have the same material composition as the first bus bar frame 120 or the second bus bar frame 150.

According to example embodiments of the present invention, the first electrode lead 113 of the first cell block 110 and the second electrode lead 143 of the second cell block 140 facing each other, and/or the first bus bar 130 and the second bus bar 160 facing each other are thermally coupled by the thermally conductive block 191 to increase thermal coupling between the cell blocks. Accordingly, temperature deviations between the cell blocks may decrease, and efficiency of thermal performance management and temperature deviation management of the cell blocks may improve.

According to example embodiments of the present invention, the thermally conductive block 191 functioning as a thermal diffusion member is attached to an electrode lead of a cell block and/or a bus bar to achieve a fast charging condition according to customers' demand and suppress the electrode lead of the cell block and/or the bus bar from being excessively heated.

The battery assembly 100 may include the inter-block bus bar 170 configured to electrically connect the first cell block 110 to the second cell block 140. The inter-block bus bar 170 may extend across the space between the first cell block 110 and the second cell block 140, and extend in the first direction (e.g., the Y-axis direction) from the first terminal bus bar 131 on the rear surface of the first cell block 110 to the second terminal bus bar 161 on the front surface of the second cell block 140. The inter-block bus bar 170 may be coupled to the first terminal bus bar 131 and the second terminal bus bar 161, and electrically connect the first terminal bus bar 131 to the second terminal bus bar 161. The inter-block bus bar 170 may be fastened to the first terminal bus bar 131 through a first bolt 181 and be fastened to the second terminal bus bar 161 through a second bolt 183. The inter-block bus bar 170 may include a first end fastened to a first fastening head of the first terminal bus bar 131, a second end fastened to a second fastening head of the second terminal bus bar 161, and a connection part extending between the first and second ends. The connection part of the inter-block bus bar 170 may include a bent portion to mitigate an external impact.

The first bolt 181 is inserted into a hole in the first end of the inter-block bus bar 170 and a hole in the first terminal bus bar 131, and the first end of the inter-block bus bar 170 may be brought into close contact with the first terminal bus bar 131 by fitting the first bolt 181 into a nut. The first end of the inter-block bus bar 170 and the first fastening head of the first terminal bus bar 131 may be accommodated in the first clearance 114 between the first cell terrace parts 119 of two adjacent first cell blocks 110. The first bus bar frame 120 may include a first concave part 121 in the first clearance 114 between the first cell terrace parts 119 of the two adjacent first cell blocks 110, and the first concave part 121 of the first bus bar frame 120 may accommodate and support the first end of the inter-block bus bar 170 and the first fastening head of the first terminal bus bar 131.

The second bolt 183 is inserted into a hole in the second end of the inter-block bus bar 170 and a hole in the second terminal bus bar 161, and the second end of the inter-block bus bar 170 may be brought into close contact with the second terminal bus bar 161 by fitting the second bolt 183 into a nut. The second end of the inter-block bus bar 170 and the second fastening head of the second terminal bus bar 161 may be accommodated in the second clearance 144 between the second cell terrace parts 149 of two adjacent second cell blocks 140. The second bus bar frame 150 may include a second concave part 151 in the second clearance 144 between the second cell terrace parts 149 of the two adjacent second cell blocks 140, and the second concave part 151 of the second bus bar frame 150 may accommodate and support the second end of the inter-block bus bar 170 and the second fastening head of the second terminal bus bar 161.

In example embodiments, coupled parts of the inter-block bus bar 170 and the first terminal bus bar 131 and coupled parts of the inter-block bus bar 170 and the second terminal bus bar 161 may be aligned in the first direction (e.g., the Y-axis direction), which is a direction in which the first cell block 110 and the second cell block 140 are arranged. In this case, the first bolt 181 fastened to the first fastening head of the first terminal bus bar 131 and the second bolt 183 fastened to the second fastening head of the second terminal bus bar 161 may be aligned in the first direction (e.g., the Y-axis direction). When viewed in a plan view, the inter-block bus bar 170 may extend linearly in the second direction (e.g., the X-axis direction). When the fastened parts of the inter-block bus bar 170 and the first terminal bus bar 131 of the first cell block 110 and the fastened parts of the inter-block bus bar 170 and the second terminal bus bar 161 of the second cell block 140 are aligned in the first direction (e.g., the Y-axis direction), which is the direction in which the first cell block 110 and the second cell block 140 are arranged, a risk of loose of the first bolt 181 and/or the second bolt 183 due to a relative movement between the first cell block 110 and the second cell block 140 may decrease, and the reliability of an electrical connection between the first cell block 110 and the second cell block 140 may improve.

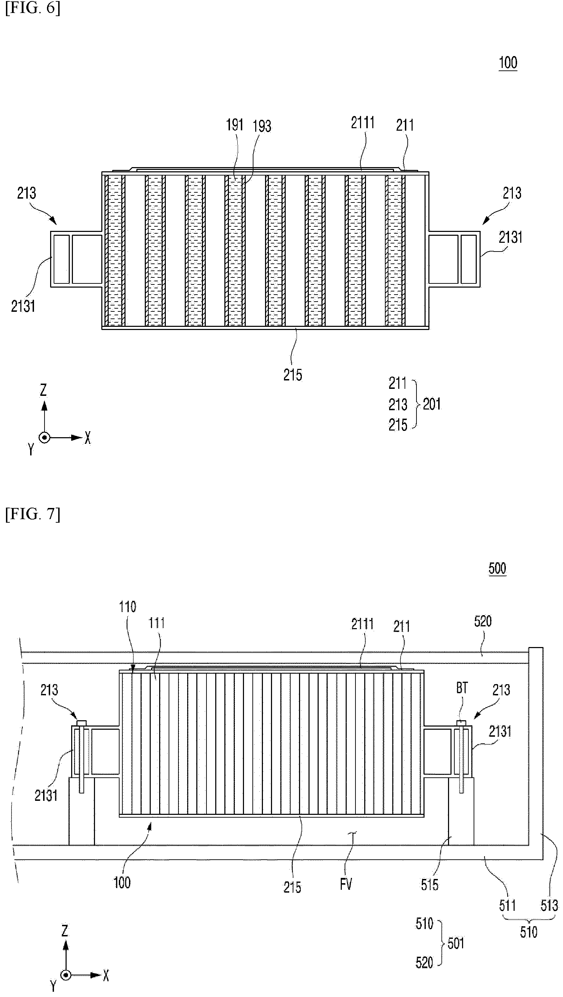

The battery assembly 100 may include a case 201 configured to accommodate the first cell block 110 and the second cell block 140 and to be fastened and supported by an external pack housing 501 (see FIG. 7). The case 201 may include a first cover plate 211, two side cover plates 213, and a second cover plate 215. The first cover plate 211 may be referred to as an upper cover plate, and the second cover plate 215 may be referred to as a lower cover plate.

The first cover plate 211 may cover a first surface of the first cell block 110 and a first surface of the second cell block 140. The first cover plate 211 may be attached to the first surface of the first cell block 110 and the first surface of the second cell block 140, and be thermally coupled to the first cell block 110 and the second cell block 140. The first cover plate 211 may be attached to each of the first cell block 110 and the second cell block 140 through a thermally conductive adhesive layer. For example, the thermally conductive adhesive layer may include the TIM.

The first cover plate 211 may include a cooling channel 2111 configured to allow a cooling fluid to flow therethrough and be configured to cool the first cell block 110 and the second cell block 140. The first cover plate 211 may be referred to as a cooling plate. The first cover plate 211 may be thermally coupled to the first cell block 110 and the second cell block 140 through the thermally conductive adhesive layer to cool the first cell block 110 and the second cell block 140.A cooling fluid supplied from the outside of the battery assembly 100 may flow into the cooling channel 2111 through a pipe 220 and an inlet of the cooling channel 2111, flow along the cooling channel 2111, be discharged through an outlet of the cooling channel 2111, and thereafter be discharged to the outside through another pipe 220.For example, the cooling channel 2111 may provide a single path from the inlet to the outlet. While the cooling fluid flows along the cooling channel 2111, the battery assembly 100 may be cooled. For example, the first cover plate 211 may be manufactured by bonding two plates together, and the cooling channel 2111 may include a space defined between the two plates.

The second cover plate 215 may cover a second surface of the first cell block 110 and a second surface of the second cell block 140. The second cover plate 215 may be spaced apart from the first cover plate 211 in the third direction (e.g., the Z-axis direction) with the first cell block 110 and the second cell block 140 interposed therebetween. The second cover plate 215 may include a venting hole for exhausting a high-temperature gas generated in the first cell block 110 and/or the second cell block 140 into a space under the first cell block 110 and the second cell block 140.

The two side cover plates 213 may be spaced apart from each other in the second direction (e.g., the X-axis direction) with the first cell block 110 and the second cell block 140 interposed therebetween. One of the two side cover plates 213 may cover a first side surface of the first cell block 110 and a first side surface of the second cell block 140 and be coupled to the first cover plate 211 and the second cover plate 215. The other side cover plate 213 may cover the second side surface of the first cell block 110 and a second side surface of the second cell block 140 and be coupled to the first cover plate 211 and the second cover plate 215.Each of the side cover plates 213 may include a plurality of fastening flanges 2131 to be fastened to and supported by the external pack housing 501 of FIG. 7.

According to example embodiments of the present invention, the battery assembly 100 includes cell blocks (e.g., the first cell block 110 and the second cell block 140) each including a plurality of battery cells, thus increasing energy density and achieving a large-scale module.

FIG. 6 is a cross-sectional view of the battery assembly 100 taken along line BB-BB' of FIG. 1.

Referring to FIGS. 1 to 5 and 6, the thermally conductive block 191 may extend in the third direction (e.g., the Z-axis direction) between the first cover plate 211 and the second cover plate 215 of the case 201. The thermally conductive block 191 may be coupled to the first cover plate 211 with the cooling channel 2111. In this case, the thermally conductive block 191 may provide a thermally conductive path between the first cell block 110 and the first cover plate 211 and a thermally conductive path between the second cell block 140 and the second cover plate 215.More specifically, the first electrode lead 113 of the first cell block 110 and/or the first bus bar 130 may be thermally coupled to the first cover plate 211 through the thermally conductive block 191, and the second electrode lead 143 of the second cell block 140 and/or the second bus bar 160 may be thermally coupled to the first cover plate 211 through the thermally conductive block 191.Because an electrode lead of a cell block and/or a bus bar may be cooled through thermal conduction to prevent thermal damage to the electrode lead of the cell block and/or the bus bar.

### (Second Embodiment)

FIG. 7 is a cross-sectional view of a battery pack 500 according to example embodiments of the present invention. Hereinafter, a description of parts of the battery pack 500 that are the same as those described above will be omitted or simplified.

Referring to FIG. 7, the battery pack 500 may include the pack housing 501, and a battery assembly 100 in the pack housing 501. The battery pack 500 may include one or more battery assemblies 100 in the pack housing 501.

The pack housing 501 may include a lower housing 510 with an accommodation space for accommodation of the battery assembly 100, and a pack lid 520 coupled to the lower housing 510 to cover the lower housing 510 in which the battery assembly 100 is accommodated. The accommodation space of the lower housing 510 may be defined by a bottom plate 511 facing a lower surface of the battery assembly 100 and side walls 513 on edges of the bottom plate 511.A plurality of support structures 515 may be provided on the bottom plate 511 of the lower housing 510 to support the battery assembly 100. The plurality of support structures 515 may be spaced apart from each other in the second direction (e.g., the X-axis direction) and extend in the first direction (e.g., the Y-axis direction).A length of each of the support structures 515 in the first direction (e.g., the Y-axis direction) may be equal to or greater than a length of the battery assembly 100 in the first direction (e.g., the Y-axis direction).

The battery assembly 100 may be mounted on the pack housing 501 in a side mounting manner. The plurality of support structures 515 extending in the first direction (e.g., the Y-axis direction) may be provided on the bottom plate 511 of the pack housing 501, and the battery assembly 100 may be fastened to the plurality of support structures 515 by a fastening member such as a bolt BT. More specifically, the battery assembly 100 may be mounted on the pack housing 501 by fastening a fastening flange 2131 of a side cover plate 213 to a corresponding support structure 515 among the plurality of support structures 515 by the bolt BT.

When the battery pack 500 is mounted in a vehicle, a cabin room in which a passenger rides may be located above the pack lid 520, and the ground on which the vehicle travels may be located below the lower housing 510.

The battery assembly 100 may be supported by the support structure 515 on the bottom plate 511 of the lower housing 510 in the side mounting manner, and a free volume FV may be formed between the bottom plate 511 of the lower housing 510 and the battery assembly 100 as the bottom plate 511 of the lower housing 510 and the battery assembly 100 are spaced apart from each other in a third direction (e.g., the Z-axis direction).A gas and flames generated in a thermal runaway situation may move through the free volume FV. That is, the free volume FV functions as a venting passage through which a high-temperature gas and flames may move.

Even when strong impact is generated due to a foreign material splashing to a lower part of a vehicle when driving on a hard ground such as a non-paved road, the impact may be absorbed through the free volume FV. Therefore, the battery assembly 100 may be prevented from being damaged due to the impact. The free volume FV may include an empty space between the battery assembly 100 and the lower housing 510. When the lower housing 510 is deformed toward the battery assembly 100 due to an impact applied to a lower part of the vehicle, the free volume FV may freely allow deformation of the lower housing 510 to some extent.

A height of the free volume FV and a distance between the bottom plate 511 of the lower housing 510 and the battery assembly 100 may be determined enough to absorb external impact. The height of the free volume FV may be determined in consideration of dimensions and rigidity of frames of the vehicle, dimensions and rigidity of the lower housing 510, dimensions of the battery pack 500, the amount of a generated gas and a gas discharge rate during thermal runaway, and the like. For example, when a thickness or rigidity of the frames of the vehicle or the bottom plate 511 of the lower housing 510 is relatively large, at least one of the size and height of the free volume FV may be relatively reduced. When the thickness or rigidity of the frames of the vehicle or the bottom plate 511 of the lower housing 510 is relatively small, the bottom plate 511 of the lower housing 510 is highly likely to deform and thus at least one of the size and height of the free volume FV may be relatively increased to protect the battery assembly 101. When the size of the battery pack 500 is relatively large compared to the specifications of the battery pack 500, a relatively large free volume FV may be secured. When the size of the battery pack 500 is relatively small, a height of the free volume FV to be secured may be relatively small and thus the thickness and rigidity of the bottom plate 511 of the lower housing 510 may be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and a gas discharge rate.

A maximum height of the free volume FV may be determined according to a damage tolerance of the battery cell 111 included in the battery assembly 100.For example, when damage tolerance of the battery cell 111 is 1 mm, the free volume FV may be determined to prevent the battery cell 111 from deforming by more than 1 mm when the lower housing 510 deforms and presses a lower surface of the battery cell 111. In this case, a degree of deformation of the lower housing 510 may vary according to the thickness or rigidity of the lower housing 510. Therefore, the size or height of the free volume FV may be determined in consideration of all the damage tolerance of the battery cell 111 and the thickness and rigidity of the lower housing 510.

In example embodiments, an upper surface of the battery assembly 100 may be in close contact with a lower surface of the pack lid 520. In example embodiments, the battery assembly 100 may be supported while being hung from the pack lid 520. When there is a space between the battery assembly 100 and the pack lid 520, a high-temperature gas may flow into the space between the battery assembly 100 and the pack lid 520 during thermal runaway, and heat and flames may propagate to adjacent battery assemblies 100 and also be transferred to the pack lid 520, and thus, the cabin room above the pack lid 520 may be influenced by the heat and the flames. Therefore, a gas or flames generated in the battery pack 500 may be guided to the free volume FV by bringing the upper surface of the battery assembly 100 and the lower surface of the pack lid 520 into close contact with each other.

### (Third Embodiment)

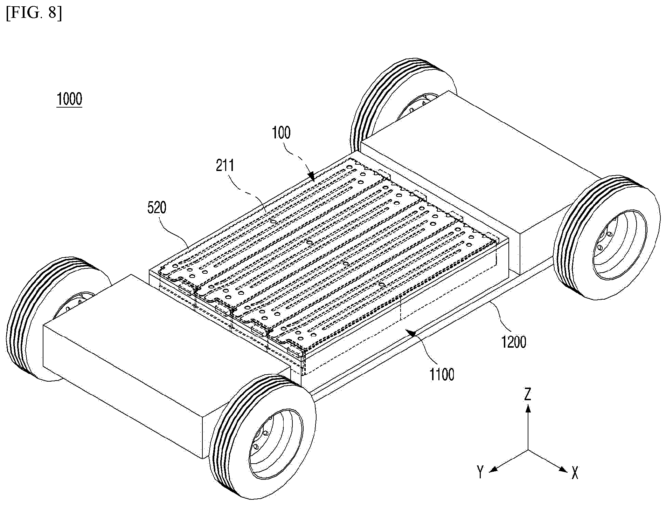

FIG. 8 is a schematic view of an electric vehicle 1000 in which a battery pack 1100 according to example embodiments of the present invention is mounted.

For the sake of simplicity, FIG. 8 illustrates only a vehicle body frame 1200 forming a lower frame of the electric vehicle 1000, and the battery pack 1100 and tires that are coupled to the vehicle body frame 1200. The battery pack 1100 may include the battery pack 500 described above with reference to FIG. 7.

In the case of a general battery pack, a battery module is installed at the bottom of a pack housing of the battery pack. In embodiments, the free volume FV of FIG. 7 may be provided below the battery assembly 100 of the battery pack 1100, and there may be no space or a very narrow space between the battery assembly 100 and the pack lid 520.Accordingly, a gas generated in the battery assembly 100 may be prevented from being transferred to a cabin room corresponding to an upper part of the electric vehicle 1000 and be guided to the free volume FV between the battery assembly 100 and the pack housing 501 of the battery pack 1100. The gas may flow through the free volume FV and thereafter be discharged from a lower side of the electric vehicle 1000 through a gas exhaust installed in the battery pack 1100. In addition, according to the present embodiments, in the battery pack 1100, the free volume FV is provided between the battery assembly 100 and the pack housing 501 to prevent the battery assembly 100 from being damaged regardless of the deformation of the pack housing 501.

According to embodiments of the present invention, the battery pack 1100 and the electric vehicle 1000 including the battery pack 1100 are capable of increasing the safety of passengers. In addition, the battery assembly 100 that is a key component can be protected and the durabilities of the battery pack 1100 and the electric vehicle 1000 can be enhanced.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery assembly comprising:
a first cell block including a plurality of first battery cells;
a second cell block including a plurality of second battery cells and spaced apart from the first cell block; and
a thermally conductive block disposed between the first cell block and the second cell block, and configured to thermally couple a first electrode lead of the first cell block and a second electrode lead of the second cell block.

2. The battery assembly of claim 1, wherein the thermally conductive block is in direct contact with the first electrode lead of the first cell block and the second electrode lead of the second cell block.

3. The battery assembly of claim 1, further comprising:
a first bus bar coupled to the first electrode lead of the first cell block; and
a second bus bar coupled to the second electrode lead of the second cell block,
wherein the thermally conductive block is in direct contact with the first bus bar and the second bus bar.

4. The battery assembly of claim 3, further comprising:
a first bus bar frame on which the first bus bar is mounted;
a second bus bar frame on which the second bus bar is mounted; and
a frame providing an inner space filled with the thermally conductive block, and coupled to at least one of the first bus bar frame and the second bus bar frame.

5. The battery assembly of claim 4, wherein the frame comprises two side plates spaced apart from each other with the inner space therebetween,
wherein the two side plates extend from the first bus bar frame to the second bus bar frame.

6. The battery assembly of claim 1, further comprising a case configured to accommodate the first cell block and the second cell block.

7. The battery assembly of claim 6, wherein the case comprises a first cover plate covering a first surface of the first cell block and a first surface of the second cell block,
wherein the first cover plate comprises a cooling channel, and
the thermally conductive block is in contact with the first cover plate.

8. The battery assembly of claim 6, wherein the case comprises a side cover plate covering a side surface of the first cell block and a side surface of the second cell block,
wherein the side cover plate comprises a fastening flange configured to be fastened to an external support structure.

9. The battery assembly of claim 1, further comprising an inter-block bus bar extending between the first cell block and the second cell block, and configured to electrically connect the first cell block to the second cell block.

10. The battery assembly of claim 1, further comprising an additional thermally conductive block disposed between the first cell block and the second cell block, and configured to thermally couple another first electrode lead of the first cell block and another second electrode lead of the second cell block,
wherein the additional thermally conductive block is spaced apart from the thermally conductive block.

11. The battery assembly of claim 1, wherein the first cell block and the second cell block are spaced apart from each other in a first direction,
in the first cell block, the plurality of first battery cells are stacked in a second direction perpendicular to the first direction, and
in the second cell block, the plurality of second battery cells are stacked in the second direction.

12. The battery assembly of claim 1, wherein the thermally conductive block comprises a thermal interface material.

13. A battery pack comprising:
a pack housing; and
a battery assembly in the pack housing,
wherein the battery assembly comprises:
a first cell block including a plurality of first battery cells;
a second cell block including a plurality of second battery cells and spaced apart from the first cell block;
a thermally conductive block disposed between the first cell block and the second cell block, and configured to thermally couple a first electrode lead of the first cell block and a second electrode lead of the second cell block; and
a case configured to accommodate the first cell block and the second cell block.

14. The battery pack of claim 13, wherein the case comprises:
a first cover plate covering a first surface of the first cell block and a first surface of the second cell block, and including a cooling channel;
a side cover plate covering a side surface of the first cell block and a side surface of the second cell block, and including a fastening flange configured to be fastened to a support structure on a bottom plate of the pack housing; and
a second cover plate covering a second surface of the first cell block and a second surface of the second cell block, wherein the second surface of the first cell block is opposite to the first surface of the first cell block, and the second surface of the second cell block is opposite to the first surface of the second cell block.

15. The battery pack of claim 14, wherein the case is spaced apart from the bottom plate of the pack housing.
